# EUROPÄISCHE PATENTANMELDUNG

(11) **EP 2 468 683 A1**
(43) Veröffentlichungstag der Anmeldung: **27.06.2012**
(21) Anmeldenummer: 10196120.9
(22) Anmeldetag: 21.12.2010
(51) Int. Cl.: C01G 37/00, C01G 37/14, C01G 37/033, C01G 37/02

(54) **Verfahren zur Herstellung von Alkalimetall-Ammoniumchromat-Doppelsalzen**

(71) Anmelder: LANXESS Deutschland GmbH, 51369 Leverkusen (DE)
(72) Erfinder: Dr. Friedrich, Holger, 2940 Newcastle (ZA); Dr. Ortmann, Rainer, 50859 Köln (DE); Dr. Stenger, Matthias, 40789 Monheim (DE); Dr. Boll, Matthias, 51067 Köln (DE); van Rooyen, Daniel, 2940 Newcastle (ZA); Kalideen, Naveen, 2940 Newcastle (ZA)

(57) **Zusammenfassung**

Verfahren zur Herstellung von Alkalimetall-Ammoniumchromat-Doppelsalzen enthaltend die Schritte:
a) Umsetzung von Alkalimetalldichromat und Ammoniak in einem wässrigen Medium und Ausfällen des erhaltenen Alkalimetall-Ammoniumchromat-Doppelsalzes,
b) Abtrennung des im Schritt a) erhaltenen Alkalimetall-Ammoniumchromat-Doppelsalzes von der Mutterlauge,
c) Umsetzung der aus dem Schritt b) erhaltenen Alkalimetallmonochromat-haltigen Mutterlauge gegebenenfalls nach deren Aufkonzentration mit Kohlendioxid und Ausfällung des dabei entstandenen Alkalimetallhydrogencarbonats,
d) Abtrennung des im Schritt c) erhaltenen Alkalimetallhydrogencarbonats und
e) Rückführung der aus dem Schritt d) erhaltenen Alkalimetalldichromat-haltigen Mutterlauge in den Schritt a).

## Beschreibung

Die Erfindung betrifft ein Verfahren zur Herstellung von Alkalimetall-Ammoniumchromat-Doppelsalzen ausgehend von Alkalimetalldichromaten.

Chrom(III)-oxid ist ein vielseitiges Produkt mit einer breiten Anwendungspalette. So kann es als Pigment zum Einfärben von unterschiedlichen Anwendungsmedien, wie beispielsweise Baustoffen, Kunststoffen, Farben & Lacken, Gläsern oder Keramiken verwendet werden. Für dieses Anwendungsgebiet ist ein möglichst niedriger Gehalt an wasserlöslichen Verunreinigungen gefordert.

Darüber hinaus wird Chrom(III)-oxid auch in Schleifmitteln und hochtemperaturbeständigen Werkstoffen verwendet. Für den Einsatz von Chrom(III)-oxid in hochtemperaturbeständigen Werkstoffen ist ein möglichst niedriger Alkalimetall-Gehalt gewünscht, um die bei hohen Temperaturen und der Anwesenheit von Alkalimetall-Ionen begünstigte Oxidation von Cr(III) zu Alkalimetallchromat so weit als möglich zu unterdrücken.

Ein weiteres wichtiges industrielles Einsatzgebiet für Chrom(III)-oxid ist die Verwendung als Ausgangsmaterial für die Herstellung von Chrommetall und/oder chromhaltigen Hochleistungslegierungen. Hier können in aller Regel nur Chrom(III)-oxide eingesetzt werden, die sich durch einen niedrigen Schwefel-Gehalt und einen niedrigen Kohlenstoff-Gehalt auszeichnen. Der Begriff "schwefelarmes Chrom(III)-oxid" wird daher häufig als Synonym für "Chrom(III)-oxid für metallurgische Zwecke" verwendet.

Chrom(III)-oxid kann nach dem Stand der Technik mit verschiedenen Verfahren hergestellt werden. Aus CN 1418821 ist bekannt, dass man schwefelfreies Chromoxid durch Kalzinierung bei 650 bis 1200°C ausgehend von einem Ammoniumchromat-Alkalimetall-Doppelsalz herstellen kann. Dabei wird als Koppelprodukt noch Alkalimetalldichromat erhalten. Als Beispiele für Ammoniumchromat-Alkalimetall-Doppelsalze sind NaNH₄CrO₄*2H₂O und KNH₄CrO₄ genannt. Die CN 1418821 offenbart allerdings kein Verfahren, zur Herstellung von Alkalimetall-Ammoniumchromat-Doppelsalzen.

In Acta Phys.-Chim. Sin, 21(2) 2005, Seite 218-220 wird die Thermolyse des Natrium-Ammoniumchromat-Doppelsalzes NaNH₄CrO₄*2H₂O analytisch untersucht. Dabei wird erwähnt, dass die Endprodukte der Thermolyse eine Mischung aus Chromoxid, Natriumdichromat und Natriumchromat ist.

Bei der ersten systematischen Untersuchung zum Phasendiagramm des Systems Na⁺, NH₄⁺ ∥ CrO₄²⁻-H₂O bei 25°C und 50°C durch russische Wissenschaftler im Jahre 1964 konnte bei 25°C und 50°C das Natrium-Ammoniumchromat-Doppelsalzes Na₂CrO₄*1.44(NH₄)₂CrO₄ und bei 50°C zusätzlich noch das Doppelsalz Na₂CrO₄*3.18(NH₄)₂CrO₄ gefunden werden (Zhurnal Prikladnoi Khimii, 37(5) 1964, Seite 989-1000). Die Doppelsalze wurden durch Umsetzung vom Natrium- und Ammoniumchromat hergestellt und nicht näher charakterisiert.

S. M. Molchanov führte im Jahr 1965 weitere Untersuchungen zum Phasendiagramm des Systems Na⁺, NH₄⁺ ∥ CrO₄²‾ -H₂O bei 25°C, 50°C und 62.8°C durch (Trudy po Khimii i Khimicheskoi Tekhnologii, 3 1965, Seite 20-26). Dabei konnte bei 25°C als Doppelsalz die Verbindung NaNH₄CrO₄*2H₂O gefunden werden. Bei 62.8°C konnte zusätzlich noch ein Natrium-Ammoniumchromat-Doppelsalz mit der Zusammensetzung 3 (NH₄)₂CrO₄*Na₂CrO₄ (= Na₀.₅(NH₄)₁.₅CrO₄) gefunden werden. Es wird erwähnt, dass sich NaNH₄CrO₄*2H₂O bei Temperaturen oberhalb 50°C in 3 (NH₄)₂CrO₄*Na₂CrO₄ (= Na₀.₅(NH₄)_{1.5}CrO₄) zersetzt, wobei die Zersetzung bei ungefähr 46°C einsetzen soll. 3 (NH₄)₂CrO₄*Na₂CrO₄ (= Na_{0.5}(NH₄)_{1.5}CrO₄) wurde allerdings lediglich anhand seiner Zusammensetzung charakterisiert. Weitergehende Untersuchungen wurden nicht vorgenommen. Über experimentelle Details wird sehr wenig berichtet. Die Autoren verweisen lediglich darauf, dass die "Erforschung des Dreistoffsystems mit der herkömmlichen Methode", also vermutlich durch Umsetzung wässriger Lösungen von Natriumchromat und Ammoniumchromat, erfolgte. Die Doppelsalze Na₂CrO₄*1.44(NH₄)₂CrO₄ und Na₂CrO₄*3.18(NH₄)₂CrO₄ konnten dagegen bei den Untersuchungen aus dem Jahr 1965 nicht nachgewiesen werden.

Bei einer Neuuntersuchung des Systems im Jahre 1967 ― ebenfalls wieder durch russische Wissenschaftler ― konnten bei 35°C abermals keine Hinweise auf die Existenz der Verbindungen Na₂CrO₄*1.44(NH₄)₂CrO₄ und Na₂CrO₄*3.18(NH₄)₂CrO₄ gefunden werden. Stattdessen wird nur das Doppelsalz NaNH₄CrO₄*2H₂O beschrieben (Trudy po Khimii i Khimicheskoi Tekhnologii, 1 1967, Seite 16-19).

Die Herstellung von NaNH₄CrO₄*2H₂O-Kristallen im Labormaßstab für die Röntgenstrukturanalyse wird in Acta Cryst., B28 1972, Seite 683-693, erwähnt. Die NaNH₄CrO₄*2H₂O-Kristalle werden durch langsames Verdunsten einer Ammoniumdichromathaltigen und Natriumcarbonat-haltigen wässrigen Lösung bei Raumtemperatur erhalten. (NH₄)₂Cr₂O₇ und Na₂CO₃ werden dabei im molaren Verhältnis 1 : 1 eingesetzt. Das Doppelsalz NaNH₄CrO₄*2H₂O soll orthorhombisch in der Raumgruppe P2₁2₁2₁ mit den Gitterparametern a = 841.3(5) pm, b = 1303.9(8) pm und c = 621.9(4) pm sowie Z = 4 kristallisieren. Es ist isostrukturell zu NaNH₄SO₄*2H₂O.

Erst wieder Ende der Neunziger Jahre des 20. Jahrhunderts und Anfang des 21. Jahrhunderts wird in zahlreichen chinesischen Forschungsarbeiten über Untersuchungen zum Phasendiagramm des Systems Na⁺, NH₄⁺ ∥ CrO₄²⁻, HCO₃⁻-H₂O beziehungsweise des Systems Na⁺, NH₄⁺ ∥ CrO₄²⁻-H₂O berichtet. So untersuchten beispielsweise Cui et al. (Wuli Huaxue Xuebao (Journal für Physik und Chemie), 16(1) 2000, Seite 70-75) das Phasendiagramm des Systems Na⁺, NH₄⁺ ∥ CrO₄²⁻-H₂O bei 25°C und 50°C, indem Na₂CrO₄ und (NH₄)₂CrO₄ in bestimmten Verhältnissen in destilliertem Wasser gelöst und dann jeweils bei 20°C und 50°C temperiert wurden. Nach Einstellung des Gleichgewichtes wurden die flüssige und feste Phase charakterisiert. Bei beiden Temperaturen konnten die Autoren lediglich das Doppelsalz NaNH₄CrO₄*2H₂O identifizieren.

Von Cui et al. (J. Chem. Eng. Data, 45 2000, Seite 257-259) wurden auch die Löslichkeiten von Na₂CrO₄, (NH₄)₂CrO₄, NaHCO₃, NH₄HCO₃ in H₂O untersucht und sie konstruierten auf der Grundlage ihrer Daten das Phasendiagramm des Systems Na⁺, NH₄⁺ ∥ CrO₄²⁻, HCO₃⁻-H₂O. Dazu wurden drei oder vier der genannten Komponenten in Wasser gelöst und dann bei 25°C und 40°C gehalten, um die Einstellung des Gleichgewichtes abzuwarten. Die nach 24 Stunden erhalten Feststoffe wurden abfiltriert und zum einen für die chemische Analyse wieder in Wasser gelöst, zum anderen als Feststoff mittels Röntgendiffraktometrie charakterisiert. Neben Na₂CrO₄ und (NH₄)₂CrO₄ konnte nur das Doppelsalz NaNH₄CrO₄*2H₂O gefunden werden. Bemerkenswert ist, dass es nicht gelang NaNH₄CrO₄*2H₂O in reiner Form zu isolieren. Es liegt als Feststoff immer zusammen mit Na₂CrO₄ oder (NH₄)₂CrO₄ oder NaHCO₃ vor.

Zu einem ähnlichen Ergebnis kamen bereits Liu et al. (Huagong Yejin (Engineering Chemistry & Metallurgy), 20 1999, Seite 410-414). Aufgrund der Löslichkeitsdaten und des Phasendiagramms im System Na⁺, NH₄⁺ ∥ CrO₄²⁻, HCO₃⁻-H₂O wurden die verschiedenen Abscheidungsformen für Chromat und die Trennung von (NH₄)₂CrO₄ bei 25°C und 30°C diskutiert. Grundidee ist die Umsetzung einer Ammoniak-haltigen Natriumchromat-Lösung mit CO₂ bei normalem Druck, wobei NaHCO₃ und (NH₄)₂CrO₄ entstehen sollen und die von den Autoren aus "Karbonisierungsreaktion" bezeichnet wird:

Na₂CrO₄ + 2 NH₃ + 2 CO₂ + 2 H₂O = 2 NaHCO₃ ↓ + (NH₄)₂CrO₄ (1)

In den Laborexperimenten wurden allerdings NH₃ und CO₂ durch NH₄HCO₃ ersetzt, was dann zu einer Natriumchromat-Lösung zugesetzt wird. Allerdings werden recht verdünnte Natriumchromat-Lösung mit Konzentrationen von teilweise deutlich unter 200 g/l eingesetzt. Als maximale Konzentration wird schließlich eine 40 Gew.-%ige Natriumchromat-Lösung genannt, was einer Cr(VI)-Konzentration von ca. 175 g/l entspricht. Bei der oben beschriebenen "Karbonisierungsreaktion" werden NH₄⁺-Ionen der Lösung hinzugefügt, während sich Na⁺-Ionen in Form von NaHCO₃ aus der Lösung abscheiden, da NaHCO₃ die geringste Löslichkeit aller Komponenten aufweist. Allerdings scheidet sich neben NaHCO₃ auch NaNH₄CrO₄*2H₂O ab. Einen Vorschlag, wie NaHCO₃ und NaNH₄CrO₄*2H₂O voneinander getrennt werden sollen, um das reine Doppelsalz zu isolieren, unterbreiten die Autoren nicht. Somit wird kein technisch brauchbares Verfahren für die Herstellung eines Natrium-Ammoniumchromat-Doppelsalzes offenbart.

In einer anderen Veröffentlichung beschäftigten sich Liu et al. ebenfalls mit dem System Na⁺, NH₄⁺ ∥ CrO₄²⁻, HCO₃⁻-H₂O und stellten fest, dass während der Umwandlung von Natriummonochromat mit Ammoniak und Kohlendioxid bei 25°C auf der Grundlage der oben beschriebenen "Karbonisierungsreaktion" nacheinander NaHCO₃, NaNH₄CrO₄*2H₂O und (NH₄)₂CrO₄ entstehen (Wujiyan Gongye (Inorganic Chemicals Industry), 35(6) 2003, Seite 20-21). Anders als in den früheren Untersuchungen setzen die Autoren nicht NH₄HCO₃ sondern NH₃ und CO₂ ein. Dazu wird zuerst Natriumchromat mit Ammoniak umgesetzt und erst dann Kohlendioxid mit hoher Reinheit zugesetzt. Dadurch scheidet sich zuerst NaHCO₃ aus der Lösung ab, bei weiterer Zugabe von CO₂ kristallisiert NaNH₄CrO₄*2H₂O aus. Wird noch mehr CO₂ zugesetzt, fällt schließlich auch (NH₄)₂CrO₄ aus. Die Autoren schlagen vor, das Gemisch der drei Feststoffe mittels eines Feststoffzyklons zu trennen, ohne darüber nähere Angaben zu machen. Es wird lediglich erwähnt, dass die Abscheidung von (NH₄)₂CrO₄-Kristallen aus der Lösung vermieden werden sollte, da sie sich nur sehr schwer vom Reaktionsgemisch abtrennen lassen. Die Autoren weisen ausdrücklich darauf hin, dass die Umwandlungsrate von Natriumchromat mit Ammoniakwasser und Kohlendioxid sehr niedrig und damit unwirtschaftlich ist. Somit ist die "Karbonisierungsreaktion" kein technisch gangbarer Weg für die Herstellung von Natrium-Ammoniumchromat-Doppelsalzen.

In einer weiteren Veröffentlichung von Liu et al. aus dem Jahre 2004 (Wuli Huaxue Xuebao (Acta Phys.-Chim. Sin. 20(11) 2004, Seite 1335-1338) werden abermals Löslichkeitsdaten und das Phasendiagramm des Systems Na⁺, NH₄⁺ ∥ CrO₄²⁻, HCO₃⁻-H₂O bei 25°C und 35°C präsentiert, allerdings ohne neue Erkenntnisse. Als maximale Reaktionstemperatur werden 35°C genannt. Auch hier wird die Umwandlungsrate durch die "Karbonisierungsreaktion" als sehr niedrig beschrieben, wodurch sich dieses Vorgehen in der Praxis als unwirtschaftlich erweist. Die Abtrennung der unterschiedlichen Feststoffe über Hydrozyklone hat sich offensichtlich ebenfalls als schwierig erwiesen, denn die Autoren erwähnen, dass man sich noch mit geeigneten Methoden der Fest-Fest-Trennung auseinandersetzen müsse.

In CN 1310132 erfolgt die Herstellung von Ammoniumchromat durch Umsetzung von Natriumchromat in Gegenwart von Kohlendioxid und Ammoniak. Das nach diesem Verfahren hergestellte Ammoniumchromat soll für die Herstellung von Chrom(III)-oxid eingesetzt werden können. Das offenbarte Verfahren zur Herstellung von Ammoniumchromat weist jedoch mehrere Nachteile auf. Zum einen muss die eingesetzte Natriumchromat-Lösung zu Beginn umkristallisiert und filtriert werden. Es ist also ein ― nur unvollständig beschriebener ― Reinigungsschritt erforderlich, bei dem Natriumchlorid als Nebenprodukt anfällt. Zum anderen erfolgt die Umsetzung mit Kohlendioxid und Ammoniak in zwei Verfahrensschritten, bei denen jeweils Kohlendioxid und Ammoniak zugesetzt werden. Die Abtrennung des nach der ersten Umsetzung gebildeten Natriumhydrogencarbonats erfolgt durch Kühlkristallisation, wobei die Abkühlrate bei 1°C/h bis 4°C/h liegt. Dadurch ist die Kristallisation ein sehr langsamer und zeitintensiver Prozess, zumal in allen offenbarten Beispielen vor der Filtration auch noch ein zweistündiger Alterungsschritt stattfindet.

Zusammenfassend bleibt festzuhalten, dass bislang noch kein technisch brauchbares Verfahren für die Herstellung von Alkalimetall-Ammoniumchromat-Doppelsalzen, insbesondere Natrium-Ammoniumchromat-Doppelsalzen, bekannt ist.

In eigenen Laborversuchen zur Herstellung von Alkalimetall-Ammoniumchromat-Doppelsalzen zwecks Referenzmuster wurden Alkalimetalldichromat-haltige Lösungen bei erhöhter Temperatur mit Ammoniak umgesetzt. Bei der Verwendung einer Natriumdichromat-haltigen Lösung und bei einer Temperatur von beispielsweise 60°C fällt ein Natrium-Ammoniumchromat-Doppelsalz mit der idealen Zusammensetzung Na_{0.5}(NH₄)_{1.5}CrO₄ aus, welches in der Wärme abfiltriert und mit 99%igem Ethanol gewaschen wurde. Das Doppelsalz kristallisiert hexagonal in der Raumgruppe P-3m1. Mit Hilfe der Röntgenstruktruanalyse konnte die Kristallstruktur an einem Einkristall aufgeklärt werde (Gitterparameter a = 598.770(10) pm, b = 598.770(10) p m und c = 779.050(10) pm sowie Z = 2). Idealisiert betrachtet beträgt das molare Ammonium : Natrium-Verhältnis in dieser Kristallstruktur 3. Tatsächlich kann es aber zu Abweichungen der Stöchiometrie beispielsweise durch Fehlbesetzungen kommen, so dass bei gleicher Kristallstruktur das Verhältnis von Ammonium zu Alkalimetall pro Formeleinheit Mₓ(NH₄)_{y}CrO₄ variieren kann, worin M für Natrium oder Kalium, insbesondere Natrium steht, und x 1.3 bis 1.6 sowie y 0.4 bis 0.7 beträgt.

Dies kann auch zu Variationen bei den Gitterparametern führen. Wie weitergehende Versuche gezeigt haben, eignet sich dieses Natrium-Ammoniumchromat-Doppelsalz in ganz hervorragender Weise für die Herstellung von Chromoxid, insbesondere von Chromoxid für metallurgische Zwecke, da das erhaltene Chromoxid einen geringen Schwefel-Gehalt aufweist.

Aufgabe der vorliegenden Erfindung war es, ein Verfahren zur Herstellung von Alkalimetall-Ammoniumchromat-Doppelsalzen, insbesondere ausgehend von Alkalimetalldichromaten, zu finden, das wirtschaftlich nutzbar ist und zudem zu Alkalimetall-Ammoniumchromat-Doppelsalzen führt, die für die Herstellung von Chromoxid, insbesondere für metallurgische Zwecke, einsetzbar sind, also insbesondere ein Chromoxid mit einem geringen Schwefel-Gehalt hervorbringt. Insbesondere sollte das technische Verfahren als geschlossener Kreislauf durchgeführt werden können, bei dem anfallende Mutterlaugen und gegebenenfalls anfallende Waschwässer wieder in den Produktionsprozess zurückgeführt werden können.

Überraschenderweise konnte gefunden werden, dass die Lösung der gestellten Aufgabe in ganz vorzüglicher Weise gelingt, durch ein Verfahren enthaltend die Schritte:
a) Umsetzung von Alkalimetalldichromat und Ammoniak in einem wässrigen Medium und Ausfällen des erhaltenen Alkalimetall-Ammoniumchromat-Doppelsalzes,
b) Abtrennung des im Schritt a) erhaltenen Alkalimetall-Ammoniumchromat-Doppelsalzes von der Mutterlauge,
c) Umsetzung der aus dem Schritt b) erhaltenen Alkalimetallmonochromat-haltigen Mutterlauge gegebenenfalls nach deren Aufkonzentration mit Kohlendioxid und Ausfällung des dabei entstandenen Alkalimetallhydrogencarbonats,
d) Abtrennung des im Schritt c) erhaltenen Alkalimetallhydrogencarbonats und
e) Rückführung der aus dem Schritt d) erhaltenen Alkalimetalldichromat-haltigen Mutterlauge in den Schritt a).

### Schritt a)

Die erfindungsgemäße Herstellung des Alkalimetall-Ammoniumchromat-Doppelsalzes erfolgt durch Umsetzung von Alkalimetalldichromat, vorzugsweise als wässrige Lösung oder Suspension, und Ammoniak. Vorzugsweise erfolgt die Herstellung des Alkalimetall-Ammoniumchromat-Doppelsalzes durch Umsetzung von Alkalimetalldichromat, als wässrige Lösung, und Ammoniak. Die Umsetzung erfolgt in einem wässrigen Medium, das neben Wasser auch noch andere anorganische oder organische Lösungsmittel enthalten kann wobei Wasser vorzugsweise Hauptbestandteil ist. Unter wässrigem Medium wird nur das Medium ohne die Reaktionskomponenten verstanden. Bevorzugt ist jedoch ein wässriges Medium, bestehend aus wenigstens 95 Gew.-%, vorzugsweise wenigstens 98 Gew.-%, insbesondere wenigstens 99 Gew.-% Wasser. Durch die Zugabe von Ammoniak zum Alkalimetalldichromat in wässrigem Medium, vorzugsweise wässriger Lösung, wird Dichromat in Monochromat überführt. Ein Teil des Monochromates fällt dann als Alkalimetall-Ammoniumchromat-Doppelsalz aus.

Das in Schritt a) eingesetzte wässrige Medium, enthält vorzugsweise eine Cr(VI)-Konzentration von wenigstens 200 g/l, besonders bevorzugt von wenigstens 300 g/l, ganz besonders bevorzugt von wenigstens 400 g/l. Als bevorzugte Obergrenze der Cr(VI)-Konzentration gilt die Löslichkeit im wässrigen Medium, wobei die Cr(VI)-Konzentration auch noch größer sein kann, da die Umsetzung auch in einer Suspension erfolgen kann.

Besonders bevorzugt wird nach dem erfindungsgemäßen Verfahren in Schritt a) ein Alkalimetall-Ammoniumchromat-Doppelsalz hergestellt, welches der Formel

Mₓ (NH₄)_{y} CrO₄

entspricht oder deren Hydrate, worin
M für Na oder K steht, wobei Na besonders bevorzugt ist,
x für eine Zahl von 0.1 bis 0.9, vorzugsweise von 0.4 bis 0.7
y für eine Zahl von 1.1 bis 1.9, vorzugsweise von 1.3 bis 1.6 und
die Summe von x und y 2 ergibt.

Bevorzugt bildet sich nach dem erfindungsgemäßen Verfahren ein Alkalimetall-Ammoniumchromat-Doppelsalz, welches ein molares Ammonium : Alkalimetall-Verhältnis > 2 aufweist.

Besonders bevorzugt ist das nach dem erfindungsgemäßen Verfahren hergestellte Alkalimetall-Ammoniumchromat-Doppelsalz ein Natrium-Ammoniumchromat-Doppelsalz.

Bei dem erfindungsgemäßen Verfahren wird der Ammoniak vorzugsweise in Form einer wässrigen Lösung oder als Gas dem wässrigen Medium, enthaltend Alkalimetalldichromat, zugesetzt. Vom Ammoniak kann entweder eine definierte Menge zugesetzt werden oder es wird so viel Ammoniak zugesetzt, bis ein gewünschter pH-Wert erreicht ist. Die Zugabe von Ammoniak kann unter Normaldruck oder unter erhöhtem Druck erfolgen. Vorzugsweise erfolgt die Zugabe von Ammoniak drucklos, also unter Normaldruck.

Bevorzugt wird Ammoniak in einem 1.0 bis 5.0fachen, besonders bevorzugt in einem 1.4 bis 4.5fachen, molaren Überschuss, bezogen auf das Alkalimetalldichromat zu dem Alkalimetalldichromat-haltigen wässrigen Medium, zugesetzt. Da das im Schritt a) eingesetzte wässrige Medium nicht notwendigerweise eine reine Lösung von Alkalimetalldichromat sein muss, sondern auch die aus dem Schritt e) erhaltene Mutterlauge enthalten kann, kann das Medium neben Alkalimetalldichromat in der Regel auch noch geringe Anteile von Monochromat enthalten. Die Monochromat-Anteile werden bei den obigen Mengenangaben hinsichtlich des molaren Überschusses an Ammoniak bezogen auf das Alkalimetalldichromat in Dichromat umgerechnet und als solche berücksichtigt.

Alternative zu der oben beschriebenen Mengenfahrweise kann die Umsetzung auch als pH-Fahrweise durchführen. Dabei wird vorzugsweise dem Alkalimetalldichromat-haltigen Medium so viel Ammoniak zugesetzt, dass ein pH-Wert erreicht wird, der bei 7.0 bis 9.5, besonders bevorzugt bei 7.5 bis 8.8, ganz besonders bevorzugt bei 7.8 bis 8.5 liegt.

Die Ausfällung des Alkalimetall-Ammoniumchromat-Doppelsalzes erfolgt vorzugsweise bei einer Temperatur oberhalb der Raumtemperatur (20°C), vorzugsweise bei einer Temperatur von über 45°C, besonders bevorzugt von über 50°C, ganz besonders bevorzugt von über 55°C. Besonders bevorzugt ist eine Temperatur von 60 bis 90°C. Die maximale Fälltemperatur wird lediglich durch den Siedepunkt des Alkalimetalldichromat-haltigen wässrigen Mediums begrenzt.

Gleichwohl kann es sein, dass verschiedene Doppelsalze ausfallen, so dass der erhaltene Feststoff ein Gemenge aus verschiedenen Alkalimetall-Ammoniumchromat-Doppelsalzen darstellt. Wobei grundsätzlich auch solche Gemenge aus verschiedenen Alkalimetall-Ammoniumchromat-Doppelsalzen für die Herstellung von Ammoniumdichromat geeignet sind, woraus sich wiederum metallurgisches Chromoxid herstellen lässt. Gegebenenfalls kann der erhaltene Feststoff auch noch geringe Mengen Ammoniummonochromat enthalten.

Beispielhaft kann die Herstellung von Ammoniumdichromat ausgehend von dem erfindungsgemäßen erhaltenen Doppelsalz erfolgen, dadurch gekennzeichnet, dass das Verfahren folgende Schritte enthält:
a) thermische Zersetzung des oben erhaltenen Alkalimetall-Ammoniumchromat-Doppelsalzes, insbesondere eines Natrium- Ammoniumchromat-Doppelsalzes oder deren Hydrate bei einer Temperatur bis zu 200 °C, insbesondere von 75 bis 190 °C unter Bildung von Ammoniumdichromat und
b) Abtrennen des Ammoniumdichromates aus dem nach Schritt a) erhaltenen Zersetzungsproduktes, insbesondere durch Kristallisation.

### Schritt b)

Das im Schritt a) gebildete Alkalimetall-Ammoniumchromat-Doppelsalz wird vorzugsweise über eine Fest-/Flüssig-Trennung von der Mutterlauge abgetrennt und gegebenenfalls gewaschen. Es verfügt über sehr gute Filtrationseigenschaften, da es in der Regel sehr grobkristallin ist.

Für die Fest-/Flüssig-Trennung kennt der Fachmann eine Vielzahl von geeigneten Aggregaten und Verfahren. Es ist unerheblich, ob Fest-/Flüssig-Trennung und Wäsche kontinuierlich oder diskontinuierlich erfolgen. Ebenso ist es unerheblich, ob sie unter Druck oder mit Vakuum durchgeführt werden.

Bei den kontinuierlich arbeitenden Filtrations- und Waschaggregaten sind beispielsweise Vakuum-Trommelfilter, Vakuum-Bandfilter oder kontinuierlich arbeitende Filtrierzentrifugen oder Sedimentierzentrifugen besonders bevorzugt. Von den diskontinuierlich arbeitenden Filtrations- und Waschaggregaten werden Filterpressen besonders bevorzugt.

Die Trennung im Schritt b) erfolgt vorzugsweise bei der gleichen Temperatur wie die Ausfällung des Alkalimetall-Ammoniumchromat-Doppelsalzes im Schritt a). Die Fest-Flüssigtrennung im Schritt b) erfolgt vorzugsweise bei einer Temperatur oberhalb Raumtemperatur, vorzugsweise bei einer Temperatur von über 45°C, besonders bevorzugt von über 50°C, ganz besonders bevorzugt von über 55°C.

Das nach der Fest-/Flüssig-Trennung im Schritt b) erhaltene Alkalimetall-Ammoniumchromat-Doppelsalz kann gegebenenfalls noch gewaschen und gegebenenfalls getrocknet werden. Die Waschung erfolgt vorzugsweise mit Wasser bei Raumtemperatur. Vorzugsweise wird jedoch auf die Waschung des Alkalimetall-Ammoniumchromat-Doppelsalzes verzichtet.

Das nach der Fest-/Flüssig-Trennung im Schritt b) erhaltene und gegebenenfalls gewaschene feuchte Alkalimetall-Ammoniumchromat-Doppelsalz wird anschließend vorzugsweise noch getrocknet bevor es weiter umgesetzt wird.

Für den gegebenenfalls durchzuführenden Trocknungsschritt kennt der Fachmann eine Vielzahl von geeigneten Aggregaten. Es seien an dieser Stelle nur Kanal-, Band-, Etagen-, Walzen-, Trommel-, Röhren-, Schaufel-, Wirbelbetttrockner oder diskontinuierlich arbeitende Kammer-Horden-Trockner erwähnt. Die Trocknung erfolgt vorzugsweise bei einer Temperatur von unter 120°C, besonders bevorzugt bei einer Temperatur von unter 100°C, um eine Zersetzung des Alkalimetall-Ammoniumchromat-Doppelsalzes zu verhindern.

Je nach gewähltem Trocknungsaggregat kann es vorteilhaft sein, wenn sich noch ein Mahlschritt anschließt, um das getrocknete Alkalimetall-Ammoniumchromat-Doppelsalz zu zerkleinern. Hierzu kennt der Fachmann eine Reihe von geeigneten Mahlaggregaten unterschiedlicher Bauart.

Die nach dem Abtrennen des Alkalimetall-Ammoniumchromat-Doppelsalz erhaltene Mutterlauge kann mit dem Waschwasser vereinigt werden bevor sie dem Schritt c) zugeführt wird.

### Schritt c):

Die aus dem Schritt b) erhaltene Alkalimetallmonochromat-haltige Mutterlauge, welche gegebenenfalls mit dem Waschwasser vereinigt wurde, ist reich an Alkalimetall-Ionen und kann für die Ausfällung von Alkalimetallhydrogencarbonat verwendet werden. Dazu kann es vorteilhaft sein, dass die Mutterlauge bzw. Mutterlauge und Waschwasser noch aufkonzentriert werden oder mit weiterem Alkalimetalldichromat versetzt werden, bevor sie im Schritt c) mit Kohlendioxid umgesetzt werden, um Alkalimetallhydrogencarbonat auszufällen. Die Aufkonzentration erfolgt besonders bevorzugt durch Eindampfen. Das Eindampfen kann unter Normaldruck erfolgen, in der Regel wird es jedoch unter vermindertem Druck vorgenommen. Der Fachmann kennt dazu eine Vielzahl von technischen Apparaten bei denen durch Wärmezufuhr Wasser aus einer Lösung verdampft und weggeführt werden kann, so dass die zurückbleibende Lösung eine höhere Konzentration an gelösten Ionen besitzt. Es sollen an dieser Stelle nur Blasenverdampfer, Röhrenverdampfer oder Dünnschichtverdampfer erwähnt werden. Bevorzugt werden Verdampferanlagen mit Gemischvorwärmung, mit Brüdenkompression oder Mehrkörper-Verdampfungsanlagen eingesetzt.

Auch kann es vorteilhaft sein, der aus dem Schritt b) erhaltenen Mutterlauge, welche gegebenenfalls mit dem Waschwasserwasser vereinigt wurde, vor der Umsetzung mit Kohlendioxid weiteres Alkalimetalldichromat zuzusetzen. Das kann entweder als Feststoff oder in Form von Lösung erfolgen. Vorzugsweise wird gerade so viel Alkalimetalldichromat zugesetzt, dass nach dem Schritt e) wieder die gleiche Cr(VI)-Konzentration in g/l erreicht wird, wie sie zu Beginn des Schrittes a) vorgelegen hat.

Der Schritt c) wird an nachfolgender Reaktionsgleichung am Beispiel der Natriumsalze veranschaulicht.

2 Na₂CrO₄ + 2 CO₂ + H₂O = Na₂Cr₂O₇ + 2 NaHCO₃ ↓ (2)

Bevorzugt erfolgt die Ausfällung von Alkalimetallhydrogencarbonat bei erhöhtem Druck, besonders bevorzugt bei einem Druck über 5 bar, ganz besonders bevorzugt bei einem Druck über 8 bar. Die Druckangaben verstehen sich als Kohlendioxid-Partialdruck.

Das im Schritt c) eingesetzte Kohlendioxid besitzt vorzugsweise eine Reinheit von wenigstens 99%. Es kann aber auch Kohlendioxid mit niedrigerer Reinheit eingesetzt werden.

Vorzugsweise werden Autoklaven mit Rührer für die Ausfällung des Alkalimetallhydrogencarbonats verwendet.

Vorzugsweise findet die Ausfällung von Alkalimetallhydrogencarbonat bei einer Temperatur von 25 bis 100°C, insbesondere 30 bis 90°C, statt.

Da die Ausfällung des Alkalimetallhydrogencarbonats und die damit verbundene Überführung von Monochromat in Dichromat ein exothermer Vorgang ist, und die aus dem Schritt b) erhaltene Mutterlauge, welche gegebenenfalls mit dem Waschwasserwasser vereinigt und gegebenenfalls noch durch Eindampfen aufkonzentriert wurde, warm ist, ist eine Kühlung vor oder während der Ausfällung des Alkalimetallhydrogencarbonates besonders vorteilhaft.

Die gleichzeitige Ausfällung von Alkalimetallhydrogencarbonat und Ammoniumhydrogencarbonat wird in der Regel unterdrückt.

Die Ausfällung kann ein- oder mehrstufig erfolgen. Vorzugsweise erfolgt die Umsetzung mit Kohlendioxid mehrstufig, wobei zwischen den einzelnen Reaktionsstufen eine Zwischenkühlung erfolgt.

### Schritt d)

Das aus dem Schritt c) erhaltene Alkalimetallhydrogencarbonat wird von der Mutterlauge abgetrennt und gegebenenfalls gewaschen. Es verfügt über sehr gute Filtrationseigenschaften, da es in der Regel sehr grobkristallin ist.

Für die Fest-/Flüssig-Trennung kennt der Fachmann eine Vielzahl von geeigneten Aggregaten und Verfahren, die bereits im Schritt b) beschrieben wurden.

Die Abtrennung des Alkalimetallhydrogencarbonat im Schritt d) erfolgt vorzugsweise bei erhöhtem Druck, wodurch die Rückreaktion in Alkalimetallmonochromat und Kohlendioxid gemäß Reaktionsgleichung (2) unterdrückt werden kann. Die Ausfällung von Alkalimetallhydrogencarbonat erfolgt bevorzugt bei einem Druck über 5 bar, ganz besonders bevorzugt bei einem Druck über 8 bar. Die Druckangaben verstehen sich als Kohlendioxid-Partialdruck.

Das nach der Fest-/Flüssig-Trennung im Schritt d) erhaltene Alkalimetallhydrogencarbonat kann ― je nach späterem Verwendungszweck ― gegebenenfalls noch gewaschen werden, bevor es weiter aufgearbeitet wird. Die Waschung dient im Wesentlichen der Verdrängung der noch auf dem Feststoff anhaftenden Mutterlauge. Die Waschung erfolgt vorzugsweise mit Wasser bei Raumtemperatur, wobei in einer besonders bevorzugen Variante des erfindungsgemäßen Verfahrens Hydogencarbonat-gesättiges Waschwasser eingesetzt wird. Dadurch kann sichergestellt werden, dass kein Alkalimetallhydrogencarbonat herausgelöst wird.

Vorzugsweise wird jedoch auf die Waschung des Alkalimetallhydrogencarbonates verzichtet. Das Alkalimetallhydrogencarbonates enthält dann zwar bedingt durch die anhaftende Mutterlauge noch Reste von Monochromat oder Dichromat, was jedoch dann unerheblich ist, wenn das Alkalimetallhydrogencarbonat durch Glühung in Alkalimetallcarbonat überführt wird, welches dann wieder für die Herstellung von Alkalimetallchromaten oder -dichromaten über den oxidativen Aufschluss von Chromeisenstein eingesetzt wird. Das bei der Glühung von Alkalimetallhydrogencarbonat zu Alkalimetallcarbonat freiwerdende Kohlendioxid wird vorzugsweise wieder in den Schritt c) zurückgeführt.

### Schritt e)

Die nach der Abtrennung des Alkalimetallhydrogencarbonates aus dem Schritt d) erhaltene Alkalimetalldichromat-haltigen Lösung wird nun wieder in den Schritt a) des erfindungsgemäßen Verfahrens zurückgeführt. Damit der Kreislauf geschlossen und aufrechterhalten werden kann, ist es bevorzugt, dass erneut Alkalimetalldichromat zugesetzt wird. Das kann entweder als Feststoff oder in Form von Lösung erfolgen. Vorzugsweise wird gerade so viel Alkalimetalldichromat zugesetzt, dass nach dem Schritt e) wieder die gleiche Cr(VI)-Konzentration in g/l erreicht wird, wie sie zu Beginn des Schrittes a) vorgelegen hat. Gegebenenfalls kann dazu eine Aufkonzentration erforderlich sein. Dies erfolgt besonders bevorzugt durch Eindampfen, wie bereits im Schritt c) beschrieben.

Anhand der nachfolgenden Beispiele wird die Erfindung näher erläutet, ohne dass dadurch eine Einschränkung der Erfindung bewirkt werden soll.

### Beispiele

### Beispiel 1

In einen 2 Liter-Reaktor mit Thermometer, pH-Elektrode, Rührer und Tropftrichter wurde eine Lösung von 1210 g Natriumdichromat Dihydrat (Na₂Cr₂O₇*2H₂O) in 519.5 g Wasser bei 65°C vorgelegt (70 Gew.-%ige Lösung, was einer Cr(VI)-Konzentration von 24.4 Gew.-% beziehungsweise ca. 590 g/l entspricht). Es stellte sich ein pH-Wert von 3.7 ein. Dann wurde bei einer Innentemperatur von 72-73°C 611.5 g Ammoniaklösung (Konzentration 26 Gew.-%) über einen Zeitraum von 100 min zudosiert, bis der pH-Wert bei 7.8 lag. Dabei fiel das Natrium-Ammoniumchromat-Doppelsalz mit der idealen Zusammensetzung Na_{0.5}(NH₄)_{1.5}CrO₄ aus. Dann wurde auf 65°C abgekühlt und noch insgesamt 30 min nachgerührt, bevor die Suspension bei 65°C auf einer beheizbaren Drucknutsche filtriert wurde. Insgesamt wurden nach der Filtration 2037 g Mutterlauge und ― ohne Waschung, lediglich nach Trocknung ― 326.6 g Niederschlag erhalten. Die Röntgenpulveraufnahme des Niederschlages stimmt sehr gut mit der des Natrium-Ammoniumchromat-Doppelsalzes mit der idealen Zusammensetzung Na_{0.5}(NH₄)_{1.5}CrO₄ überein. Darüber hinaus zeigt die Röntgenpulveraufnahme noch Spuren von NaNH₄CrO₄*2H₂O im Niederschlag. Der erhaltene Niederschlag wies folgende Zusammensetzung auf: Natrium 7.92 Gew.-%, Ammonium 16.70 Gew.-%, Cr(VI) 33.43 Gew.-%.

Zu 2012.2 g der erhaltenen Mutterlauge wurden 314.4 g Natriumdichromat Dihydrat (Na₂Cr₂O₇*2H₂O) zugesetzt und in der Wärme bei 70°C gelöst. Damit wird der Mutterlauge wieder die Cr(VI)-Menge zugesetzt, die ihr durch die Ausfällung von Na_{0.5}(NH₄)_{1.5}CrO₄ entzogen wurden. Der warmen Lösung wurde nun Kohlendioxid mit einem Druck von 9 bar aufgedrückt, wobei Natriumhydrogencarbonat NaHCO₃ ausfiel. Das Natriumhydrogencarbonat wurde unter Druck von der Mutterlauge abgetrennt. Das abgetrennte Natriumhydrogencarbonat wurde nicht gewaschen, sondern lediglich getrocknet. Es fielen 140.4 g NaHCO₃ und 2177.5 g Mutterlauge an. Das NaHCO₃ enthielt gemäß einer Röntgenpulveraufnahme ― da es nicht gewaschen wurde ― auch noch Natriummonochromat Tetrahydrat (Na₂CrO₄*4H₂O). Der Ammonium-Gehalt des Natriumhydrogencarbonates lag bei nur 3600 ppm.

Nach der Abtrennung des Natriumhydrogencarbonates wurden 2177.5 g Mutterlauge erhalten, von der 452.3 g Wasser abdestilliert wurden, wodurch sich eine Cr(VI)-Konzentration ergab, die in etwa der bereits oben beschriebenen Ausgangskonzentration bei der ersten Umsetzung der Natriumdichromat-haltigen Lösung mit Ammoniak entsprach. Bei 65°C wurde Ammoniaklösung (Konzentration 26 Gew.-%) zudosiert, bis der pH-Wert bei 8.4 lag. Dabei fiel das Natrium-Ammoniumchromat-Doppelsalz mit der idealen Zusammensetzung Na_{0.5}(NH₄)_{1.5}CrO₄ aus. Dann wurde noch insgesamt 30 min bei 65°C nachgerührt, bevor die Suspension bei 65°C auf einer beheizbaren Drucknutsche filtriert wurde. Insgesamt wurden nach der Filtration 1613.9 g Mutterlauge und ― ohne Waschung, lediglich nach Trocknung ― 375.6 g Niederschlag erhalten. Die Röntgenpulveraufnahme des Niederschlages stimmt sehr gut mit der des Natrium-Ammoniumchromat-Doppelsalzes mit der idealen Zusammensetzung Na_{0.5}(NH₄)_{1.5}CrO₄ überein. Darüber hinaus zeigt die Röntgenpulveraufnahme noch Spuren von (NH₄)₂CrO₄ im Niederschlag. Der erhaltene Niederschlag wies folgende Zusammensetzung auf: Natrium 7.67 Gew.-%, Ammonium 16.28 Gew.-%, Cr(VI) 32.59 Gew.-%. Die Mutterlauge wies noch einen Cr(VI)-Gehalt von 201.6 g/l auf.

### Beispiel 2

In einen 2 Liter-Reaktor mit Thermometer, pH-Elektrode, Rührer und Tropftrichter wurde eine Lösung von 1210 g Natriumdichromat Dihydrat (Na₂Cr₂O₇*2H₂O) in 519.5 g Wasser bei 65°C vorgelegt (70 Gew.-% ige Lösung, was einer Cr(VI)-Konzentration von 24.4 Gew.-% beziehungsweise ca. 590 g/l entspricht). Es stellte sich ein pH-Wert von 3.3 ein. Dann wurde bei einer Innentemperatur von 68-70°C 663.4 g Ammoniaklösung (Konzentration 26 Gew.-%) über einen Zeitraum von 80 min zudosiert, bis der pH-Wert bei 8.3 lag. Dabei fiel das Natrium-Ammoniumchromat-Doppelsalz mit der idealen Zusammensetzung Na_{0.5}(NH₄)_{1.5}CrO₄ aus. Dann wurde auf 65°C abgekühlt und noch insgesamt 30 min nachgerührt, bevor die Suspension bei 65°C auf einer beheizbaren Drucknutsche filtriert wurde. Insgesamt wurden nach der Filtration 1961 g Mutterlauge und ― ohne Waschung, lediglich nach Trocknung ― 365 g Niederschlag erhalten. Die Röntgenpulveraufnahme des Niederschlages stimmt sehr gut mit der des Natrium-Ammoniumchromat-Doppelsalzes mit der idealen Zusammensetzung Na_{0.5}(NH₄)_{1.5}CrO₄ überein. Irgendwelche Fremdphasen konnten nicht gefunden werden. Der erhaltene Niederschlag wies folgende Zusammensetzung auf: Natrium 7.71 Gew.--%, Ammonium 16.95 Gew.-%, Cr(VI) 33.44 Gew.-%.

Von der Mutterlauge wurden 232 g Wasser abdestilliert und auf die 65°C warme Lösung wurde nun Kohlendioxid mit einem Druck von 9 bar aufgedrückt, wobei Natriumhydrogencarbonat NaHCO₃ ausfiel. Das Natriumhydrogencarbonat wurde unter einem Druck von 9 bar von der Mutterlauge abgetrennt. Das abgetrennte Natriumhydrogencarbonat wurde nicht gewaschen, sondern lediglich getrocknet. Es fielen 1627 g Mutterlauge an.

Nach der Abtrennung des Natriumhydrogencarbonates wurden der erhaltenen Mutterlauge 376.6 g Natriumdichromat Dihydrat bei 65°C zugesetzt und gelöst, wodurch sich eine Cr(VI)-Konzentration ergab, die in etwa der bereits oben beschriebenen Ausgangskonzentration bei der ersten Umsetzung der Natriumdichromat-haltigen Lösung mit Ammoniak entsprach. Bei einer Temperatur von 67-71°C wurde Ammoniaklösung (Konzentration 26 Gew.-%) zudosiert, bis der pH-Wert bei 8.0 lag. Dabei fiel das Natrium-Ammoniumchromat-Doppelsalz mit der idealen Zusammensetzung Na_{0.5}(NH₄)_{1.5}CrO₄ aus. Dann wurde noch insgesamt 80 min bei 65°C nachgerührt, bevor die Suspension bei 65°C auf einer beheizbaren Drucknutsche filtriert wurde. Der erhaltene Niederschlag wies folgende Zusammensetzung auf: Natrium 7.57 Gew.-%, Ammonium 16.55 Gew.-%, Cr(VI) 32.61 Gew.-%.. Die Mutterlauge wies noch einen Cr(VI)-Gehalt von 199.2 g/l auf.

## Patentansprüche

1. Verfahren zur Herstellung von Alkalimetall-Ammoniumchromat-Doppelsalzen enthaltend die Schritte:
a) Umsetzung von Alkalimetalldichromat und Ammoniak in einem wässrigen Medium und Ausfällen des erhaltenen Alkalimetall-Ammoniumchromat-Doppelsalzes,
b) Abtrennung des im Schritt a) erhaltenen Alkalimetall-Ammoniumchromat-Doppelsalzes von der Mutterlauge,
c) Umsetzung der aus dem Schritt b) erhaltenen Alkalimetallmonochromat-haltigen Mutterlauge gegebenenfalls nach deren Aufkonzentration mit Kohlendioxid und Ausfällung des dabei entstandenen Alkalimetallhydrogencarbonats,
d) Abtrennung des im Schritt c) erhaltenen Alkalimetallhydrogencarbonats und
e) Rückführung der aus dem Schritt d) erhaltenen Alkalimetalldichromat-haltigen Mutterlauge in den Schritt a).

2. Verfahren gemäß Anspruch 1, **dadurch gekennzeichnet, dass** das Alkalimetall-Ammoniumchromat-Doppelsalz der Formel
Mₓ (NH₄)_{y} CrO₄
entspricht oder deren Hydrate, worin
M für Na oder K steht, wobei Na besonders bevorzugt ist,
x für eine Zahl von 0.1 bis 0.9, vorzugsweise von 0.4 bis 0.7 y für eine Zahl von 1.1 bis 1.9, vorzugsweise von 1.3 bis 1.6 und
die Summe von x und y 2 ergibt.

3. Verfahren gemäß Anspruch 1, **dadurch gekennzeichnet, dass** das Alkalimetall-Ammoniumchromat-Doppelsalz ein molares Ammonium : Alkalimetall-Verhältnis ≥ 2 aufweist.

4. Verfahren gemäß Anspruch 1, **dadurch gekennzeichnet, dass** das Alkalimetall-Ammoniumchromat-Doppelsalz ein Natrium-Ammoniumchromat-Doppelsalz ist.

5. Verfahren gemäß Anspruch 1, **dadurch gekennzeichnet, dass** die Ausfällung des Alkalimetall-Ammoniumchromat-Doppelsalzes in Schritt a) bei einer Temperatur von über 45°C, insbesondere von über 50°C, vorzusgsweise von über 55°C erfolgt.

6. Verfahren gemäß Anspruch 1, **dadurch gekennzeichnet, dass** die Ausfällung von Alkalimetallhydrogencarbonat in Schritt a) bei erhöhtem Druck, insbesondere bei einem Druck über 5 bar stattfindet.

7. Verfahren gemäß Anspruch 1, **dadurch gekennzeichnet, dass** die Ausfällung von Alkalimetallhydrogencarbonat in Schritt c) bei einer Temperatur von 25 bis 100°C, insbesondere 30 bis 90°C, stattfindet.
